# EUROPEAN PATENT APPLICATION

(11) **EP 4 566 744 A1**
(43) Date of publication of application: **11.06.2025**
(21) Application number: 24209713.7
(22) Date of filing: 30.10.2024
(51) Int. Cl.: B23B 51/00, B23D 77/00, B23B 51/06

(54) **PRESSURE-ACTIVATED TOOL**

(30) Priority: 30.11.2023 US 202318524191
(71) Applicant: KENNAMETAL INC., Latrobe, PA 15650 (US)
(72) Inventor: Frota De Souza Filho, Ruy, Latrobe, 15650 (US); Gey, Christoph, Latrobe, 15650 (US); Kroedel, Alexander, Latrobe, 15650 (US)
(74) Representative: Prinz & Partner mbB

(57) **Abstract**

A cutting tool system (10) may include a tool body (12), a flexible internal pressure chamber (14), and at least one cutting edge (16). The flexible internal pressure chamber may be disposed within the tool body. The at least one cutting edge may be attached to the tool body. The flexible internal pressure chamber may be configured to elastically deform, due to pressure within the flexible internal pressure chamber, which in turn may deform the tool body, which in turn may change a position of the at least one cutting edge attached to the tool body.

## Description

### FIELD OF THE DISCLOSURE

The disclosure relates to pressure-activated cutting tools.

### BACKGROUND

Cutting tools, such as hole-finishing tools, may require fine adjustment of cutting edges for diameter setting and for wear compensation. This may be time-comprehensive, inefficient, and costly. Motion tools may be used to machine multiple diameters and features on a component. However, these may be complex and costly.

A cutting tool system and method of use is needed to reduce or eliminate one or more issues associated with one or more of the existing cutting tools and methods of their use.

### SUMMARY

In one embodiment, a cutting tool system may include a tool body, a flexible internal pressure chamber, and at least one cutting edge. The flexible internal pressure chamber may be disposed within the tool body. The at least one cutting edge may be attached to the tool body. The flexible internal pressure chamber may be configured to elastically deform, due to pressure within the flexible internal pressure chamber, which in turn may deform the tool body, which in turn may change a position of the at least one cutting edge attached to the tool body.

In another embodiment, a cutting tool system may include a tool body, a flexible internal pressure chamber, at least one cutting edge, at least one pressure sensor, a valve, and a computer numerical control. The tool body may include a stiff, exterior portion. The flexible internal pressure chamber may be disposed within the tool body. The flexible internal pressure chamber may support the stiff, exterior portion. The at least one cutting edge may be attached to the stiff, exterior portion. The at least one pressure sensor may be connected to the flexible internal pressure chamber. The valve may be connected to the flexible internal pressure chamber. The computer numerical control device may be connected to the at least one pressure sensor and to the valve. The computer numerical control device may be configured to monitor the pressure within the flexible internal pressure chamber with the at least one pressure sensor, and to control the pressure within the flexible internal pressure chamber with the valve. The flexible internal pressure chamber may be configured to elastically deform, due to pressure applied by the computer numerical control device within the flexible internal pressure chamber, thereby deforming the stiff, exterior portion, thereby changing a position of the at least one cutting edge attached to the stiff, exterior portion.

In still another embodiment, a method of cutting may be disclosed. In one step, a pressure within a flexible internal pressure chamber of a tool body may be controlled to elastically deform the flexible internal pressure chamber. In another step, a stiff, exterior portion of the tool body may deform due to the deformation of the flexible internal pressure chamber. In yet another step, a position of at least one cutting edge, attached to the stiff, exterior portion of the tool body, may change due to the deformation of the stiff, exterior portion of the tool body.

The scope of the present disclosure is defined solely by the appended claims and is not affected by the statements within this summary.

### BRIEF DESCRIPTION OF THE DRAWINGS

The disclosure can be better understood with reference to the following drawings and description. The components in the figures are not necessarily to scale, emphasis instead being placed upon illustrating the principles of the disclosure.
Figure 1 illustrates one embodiment of a cross-section view through a tool body of a cutting tool system with a flexible internal pressure chamber of the tool body in an unpressurized state;
Figure 2 illustrates a cross-section view through the tool body of the cutting tool system of Figure 1 showing in solid lines a position of the tool body when the flexible internal pressure chamber is in the unpressurized state, and showing in dashed lines the position of the tool body when the flexible internal pressure chamber is in a pressurized state;
Figure 3 illustrates one embodiment of a helical pattern that may be used in a tool body of a cutting system having a flexible internal pressure chamber;
Figure 4 illustrates another embodiment of a helical pattern that may be used in a tool body of a cutting system having a flexible internal pressure chamber;
Figure 5 illustrates yet another embodiment of a helical pattern that may be used in a tool body of a cutting system having a flexible internal pressure chamber;
Figure 6 illustrates one embodiment of a graph plotting, for the embodiment of Figures 1-2, the displacement of an exterior portion of the tool body along one axis at varying diameters of an inner surface of the exterior portion and at varying pressures of the flexible internal pressure chamber;
Figure 7 illustrates another embodiment of a graph plotting, for the embodiment of Figures 1-2, the displacement of the exterior portion of the tool body along another axis at varying diameters of the inner surface of the exterior portion and at varying pressures of the flexible internal pressure chamber;
Figure 8 illustrates one embodiment of a graph plotting, for the embodiment of Figures 1-2, the displacement of the exterior portion of the tool body along an axis at varying diameters of the inner surface of the exterior portion and at varying revolutions per minute of the tool body;
Figure 9 illustrates another embodiment of a graph plotting, for the embodiment of Figures 1-2, the displacement of the exterior portion of the tool body along an axis at varying diameters of the inner surface of the exterior portion and at varying revolutions per minute of the tool body; and
Figure 10 is a flowchart illustrating one embodiment of a method of cutting.

### DETAILED DESCRIPTION

Before one embodiment of the disclosure is explained in detail, it is to be understood that the disclosure is not limited in its application to the details of the construction and the arrangements of components set forth in the following description or illustrated in the drawings. The present disclosure is capable of other embodiments and of being practiced or being carried out in various ways. Also, it is to be understood that the phraseology and terminology used herein is for the purpose of description and should not be regarded as limiting. The use of "including," "comprising," or "having" and variations thereof as used herein is meant to encompass the items listed thereafter and equivalents thereof as well as additional items. The use of "consisting of' and variations thereof as used herein is meant to encompass only the items listed thereafter and equivalents thereof. Unless specified or limited otherwise, the terms "attached", "secured" and variations thereof are used broadly and encompass both direct and indirect mountings, connections, supports, and couplings.

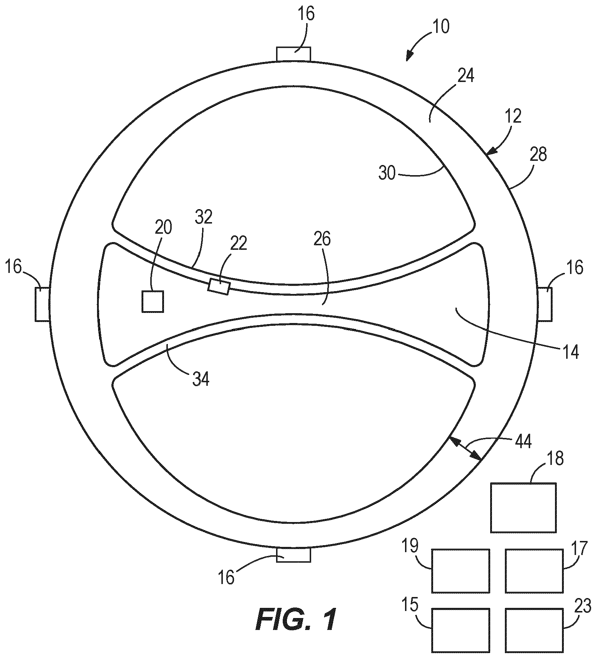

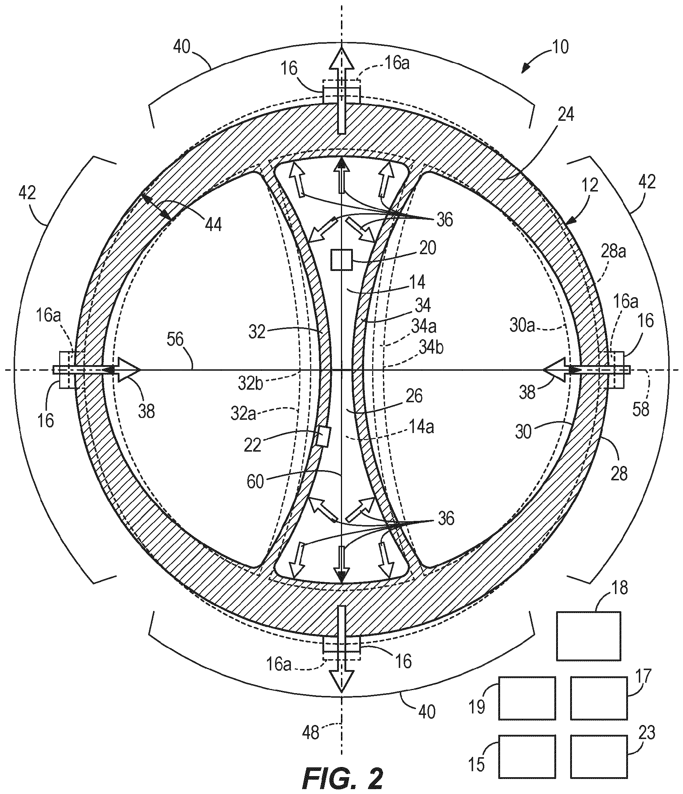

As illustrated collectively in Figures 1-2, in one embodiment a cutting tool system 10 may comprise a tool body 12, a flexible internal pressure chamber 14, at least one cutting edge 16, an external control device 17 (e.g. the machine tool control), a computer numerical control device 18, an electronic unit 19, a pressure sensor 20, and a valve 22 and/or a frequency driven pump 23. The cutting tool system 10 may be used for hole-finishing. The cutting tool system 10 may be used for semi-finishing or finishing operations by selectively actuating the cutting edges 16. The cutting tool system 10 may also be used on an EV stator for closed loop boring, on large or small diameters for carbide or steel structures, or on milling cutters. In other embodiments, the cutting tool system 10 may comprise varying components and may be used for varying other types of cutting.

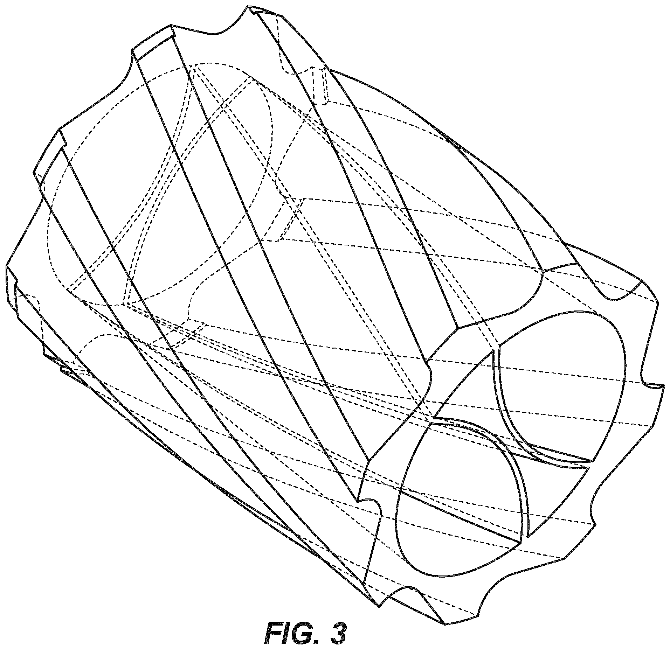

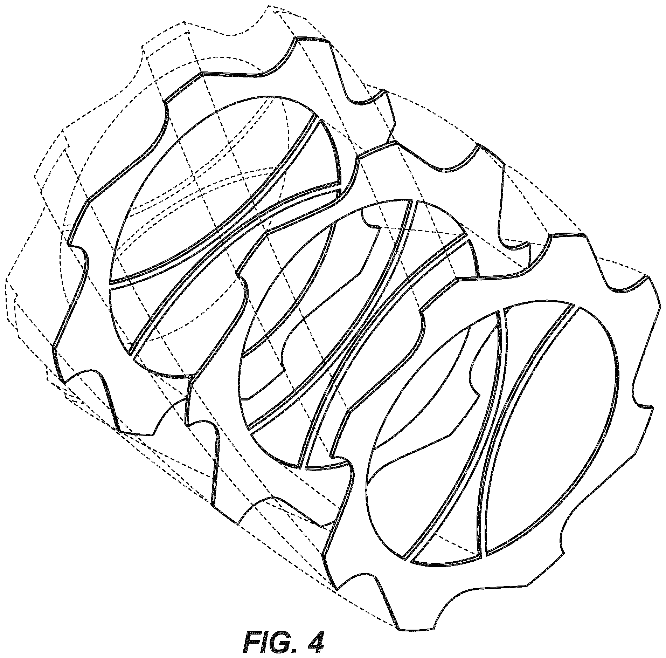

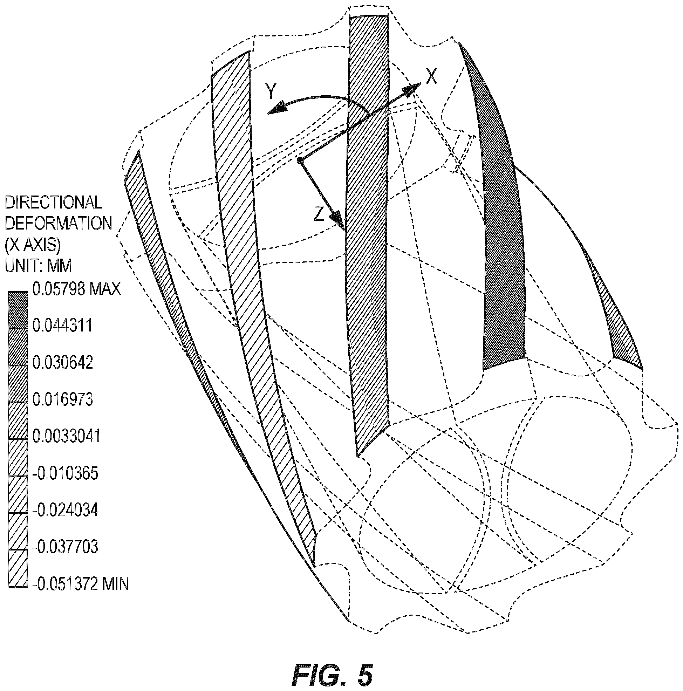

The tool body 12 may comprise an exterior portion 24 and an internal portion 26. The exterior portion 24 may be stiff. The exterior portion 24 may comprise an outer surface 28 and an inner surface 30. The exterior portion 24 may comprise a cylindrical shape when the flexible internal pressure chamber 14 is in an unpressurized state. In other embodiments, the exterior portion, internal structure, or entire cross-section of the tool body 12 may comprise a helical pattern as shown in the different embodiments of Figures 3, 4, and 5. This may allow the use of the disclosure in fluted tools such as reamers, end-mills, and drills. This may further provide for control of a cutting diameter of the different edges or margin/guide areas of the tool. In additional embodiments, the tool body 12 may vary in shape and configuration.

The flexible internal pressure chamber 14 may be disposed within the internal portion 26. Walls 32 and 34 of the flexible internal pressure chamber 14 may be attached to the inner surface 30 of the exterior portion 24. The walls 32 and 34 of the flexible internal pressure chamber 14 may be elastically flexible and may support the exterior portion 24. The walls 32 and 34 and the external portion 24 may change in shape and stiffness at different axial locations, allowing for a conical shape to be created and more expansion closer to a tool-end. This may minimize contact with the workpiece in drilling or reaming, controlling the portion of the edges that are doing the cutting or guiding.

The at least one cutting edge 16 may be attached to the outer surface 28 of the exterior portion 24 of the tool body 12. The at least one cutting edge 16 may comprise a plurality of cutting edges 16 attached at varying locations to the outer surface 28 of the exterior portion 24 of the tool body 12. In one embodiment, the at least one cutting edge 16 may comprise a cutting insert. In another embodiment, the at least one cutting edge 16 may comprise an integral portion of the tool body 12. In still other embodiments the at least one cutting edge 16 may vary.

The pressure sensor 20 may be disposed within and connected to the flexible internal pressure chamber 14. The valve 22 and/or frequency driven pump 23 may be connected to the flexible internal pressure chamber 14. The external control device 17, the computer numerical control device 18, the electronic unit 19, the pressure sensor 20, the valve 22 and/or the frequency driven pump 23 may all be in electronic communication with one another.

The external control device 17 may control the pressure level in the flexible internal pressure chamber 14. The external control device 17 may comprise an electronic device that translates information from G-Code, e.g. via M-Functions, to determine a needed pressure level within the flexible internal pressure chamber 14 to achieve a desired parameter. The external control device 17 and the cutting tool system 10 may communicate with the computer numerical control device 18 to ensure that the needed pressure level within the flexible internal pressure chamber 14 is obtained. The electronic unit 19 may wirelessly transmit the pressure signal from the pressure sensor 20 to the external control device 17. The pressure signal may be used in the external control device 17, together with a lookup table, to evaluate the position of the at least one cutting edge 16 and adjust the position of the at least one cutting edge 16 to a target position by controlling a pressure level within the flexible internal pressure chamber 14.

Air or coolant supply pressurizing the flexible internal pressure chamber 14 may be supplied by the cutting tool system 10 or a separate system 15 which may be in electronic communication with the cutting tool system 10. The external control device 17, the computer numerical control device 18, and the electronic unit 19 may be configured to collectively monitor the pressure within the flexible internal pressure chamber 14 with the pressure sensor 20. The external control device 17, the computer numerical control device 18, and the electronic unit 19 may be configured to control the pressure within the flexible internal pressure chamber 14 with the valve 22 and/or the frequency driven pump 23. In other embodiments, varying devices and/or systems may be used to control the pressure within the flexible internal pressure chamber 14.

The walls 32 and 34 of the flexible internal pressure chamber 14 may be curved inwardly. The walls 32 and 34 of the flexible internal pressure chamber 14 may be configured to elastically deform when the external control device 17, the computer numerical control device 18, and the electronic unit 19 cause the valve 22 and/or frequency driven pump 23 to pressurize the flexible internal pressure chamber 14. This pressure within the flexible internal pressure chamber 14 may cause the walls 32 and 34 of the flexible internal pressure chamber 14 to elastically deform in directions 36 to change their positions from the solid lines shown by 32 and 34 to the dashed lines shown by 32a and 34a and to change the position of the flexible internal pressure chamber 14 from the solid lines shown by 14 to the dashed lines shown by 14a. The walls 32 and 34 may elastically deform the most in their center locations 32b and 34b and progressively less the farther away from their center locations 32b and 34b with their elastic deformation being the least where the walls 32 and 34 adjoin the inner surface 30.

The adjustment in the position of the walls 32a and 34a may cause the outer and inner surfaces 28 and 30 of the exterior portion 24 of the tool body 12 to deform in directions 38 to change their positions from the solid lines shown by 28 and 30 to the dashed lines shown by 28a and 30a. During this time, the portion 40 of the outer and inner surfaces 28 and 30 of the exterior portion 24 adjacent the inner and outer walls 32 and 34 may outwardly expand, while the portion 42 of the outer and inner surfaces 28 and 30 of the exterior portion 24 away from the inner and outer walls 32 and 34 may inwardly contract.

The outward expansion of portion 40 of the outer and inner surfaces 28 and 30 of the exterior portion 24 adjacent the inner and outer walls 32 and 34 may increase continually and proportionately to the pressure increases in the flexible internal pressure chamber 14. Similarly, the inward contraction of portion 42 of the outer and inner surfaces 28 and 30 of the exterior portion 24 away from the inner and outer walls 32 and 34 may increase continually and proportionately to the pressure increases in the flexible internal pressure chamber 14.

The adjustment in the position of the outer and inner surfaces 28a and 30a of the exterior portion 24 of the tool body 12 may cause the at least one cutting edge 16 attached to the outer surface 28 of the exterior portion 24 of the tool body 12 to change its position from the solid lines shown by 16 to the dashed lines shown by 16a. During this time, the cutting edges 16 attached to the portion 40 of the outer and inner surfaces 28 and 30 of the exterior portion 24 adjacent the inner and outer walls 32 and 34 may move outwardly as the portion 40 of the inner and outer walls 32 and 34 outwardly expands, while the cutting edges 16 attached to the portion 42 of the outer and inner surfaces 28 and 30 of the exterior portion 24 away from the inner and outer walls 32 and 34 may move inwardly as the portion 42 of the inner and outer walls 32 and 34 inwardly contracts.

The outward movement of the cutting edges 16 attached to the portion 40 of the outer and inner surfaces 28 and 30 of the exterior portion 24 adjacent the inner and outer walls 32 and 34 may increase continually and proportionately to the pressure increases in the flexible internal pressure chamber 14 as the portion 40 of the outer and inner surfaces 28 and 30 of the exterior portion 24 adjacent the inner and outer walls 32 and 34 outwardly expands increasingly, continually, and proportionately. Similarly, the inward movement of the cutting edges 16 attached to the portion 42 of the outer and inner surfaces 28 and 30 of the exterior portion 24 away from the inner and outer walls 32 and 34 may increase continually and proportionately to the pressure increases in the flexible internal pressure chamber 14 as the portion 42 of the outer and inner surfaces 28 and 30 of the exterior portion 24 away from the inner and outer walls 32 and 34 inwardly contracts increasingly, continually, and proportionately.

When the pressure in the flexible internal pressure chamber 14 is decreased, the opposite elastic movement of the walls 32 and 34 of the flexible internal pressure chamber 14 may occur so that the walls 32 and 34 move back from their pressurized positions as shown by the dashed lines towards their initial unpressurized positions as shown by the solid lines. This may cause the outer and inner surfaces 28 and 30 of the exterior portion 24 of the tool body 12 to move back from their pressurized positions as shown by the dashed lines towards their pressurized condition as shown by the solid lines. This may cause the cutting edges 16 attached to the outer surface 28 of the exterior portion 24 of the tool body 12 to move from their pressurized positions as shown by the dashed lines back towards their initial pressurized condition as shown by the solid lines.

In other embodiments, the walls 32 and 34 of the flexible internal pressure chamber 14 and the exterior portion 24 of the tool body 12 may comprise varying pre-determined shapes and configurations when the flexible internal pressure chamber 14 is in an unpressurized state. These pre-determined shapes and configurations may be uniform or non-uniform (such as uneven mass distributions) to achieve the desired outward expansion and/or inward contraction of the cutting edges 16 at varying portions of the exterior portion 24 with changes to pressure within the flexible internal pressure chamber 14 and with changes to the rotations per minute of the tool body 12. For instance, in one embodiment a width 44 of the exterior portion 24 of the tool body 12 between the outer and inner surfaces 28 and 30 may vary at varying locations when the flexible internal pressure chamber 14 is in an unpressurized state. For instance, the width 44 of the exterior portion 24 of the tool body 12 may be made to be larger at locations of the exterior portion 24 at which less movement is desired as the pressure in the flexible internal pressure chamber 14 increases, and the width 44 of the exterior portion 24 of the tool body 12 may be made to be smaller at locations of the exterior portion 24 at which less movement is desired as the pressure in the flexible internal pressure chamber 14 increases.

In one embodiment, the tool body 12 may be manufactured using additive layer manufacturing. In other embodiments, the tool body 12 may be manufactured using varying manufacturing systems and methods.

By varying the shape and configuration of the walls 32 and 34 of the flexible internal pressure chamber 14 and the shape and configuration of the exterior portion 24 and the locations at which the cutting edges 16 are attached to the exterior portion 24, the cutting tool system 10 may achieve the desired movement of the cutting edges 16 for the particular cutting application. The cutting edges 16 may be strategically located at varying positions of the outer surface 28 of the exterior portion 24 where they will, as the pressure in the flexible internal pressure chamber 14 increases, move outwardly, move inwardly, or remain in a constant position. In other embodiments, the shape and configuration of the walls 32 and 34 of the flexible internal pressure chamber and the shape and configuration of the exterior portion 24 of the tool body 12 may be varied to achieve movement at varying portions of the exterior portion 24 which is non-proportional to the increases in pressure within the flexible internal pressure chamber 14.

In one embodiment, the shape and configuration of the walls 32 and 34 of the flexible internal pressure chamber 14 and the shape and configuration of the exterior portion 24 may be adjusted so that the change in position of the at least one cutting edge 16 attached to the outer surface 28 of the tool body 12 is independent of how quickly the cutting tool system 10 rotates. In another embodiment, the shape and configuration of the walls 32 and 34 of the flexible internal pressure chamber 14 and the shape and configuration of the exterior portion 24 may be adjusted so that the change in position of the at least one cutting edge 16 attached to outer surface 28 of the tool body 12 is dependent on how quickly the cutting tool system 10 rotates.

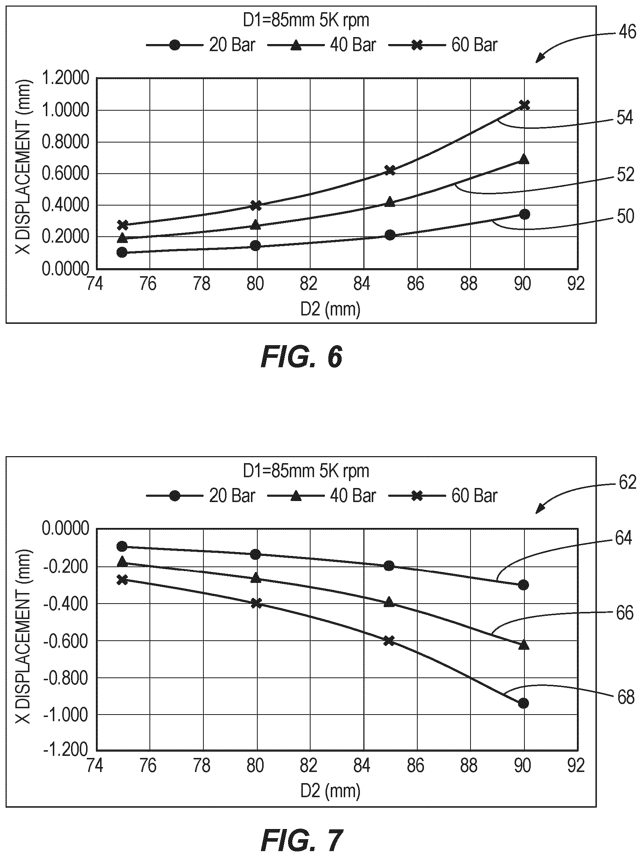

Figure 6 illustrates one embodiment of a graph 46 plotting, for the embodiment of Figures 1-2, the displacement of the exterior portion 24 of the tool body 12 along axis 48 at varying diameters of the inner surface 30 of the exterior portion 24 and at varying pressures of the flexible internal pressure chamber 14. One curve 50 is shown when the flexible internal pressure chamber 14 of the tool body 12 is at a pressure of 20 bar, another curve 52 is shown when the flexible internal pressure chamber 14 of the tool body 12 is at a pressure of 40 bar, and another curve 54 is shown when the flexible internal pressure chamber 14 of the tool body 12 is at a pressure of 60 bar. The graph 46 uses a constant diameter 56 of 85 millimeters of the inner surface 30 of the exterior portion 24 along axis 58 when the flexible internal pressure chamber 14 is in an unpressurized state, and a constant revolutions per minute of the tool body 12 of 5,000 revolutions per minute. The graph 46 illustrates on the X axis the measurement of the diameter 60 of the inner surface 30 of the exterior portion 24 along axis 48 when the flexible internal pressure chamber 14 is in an unpressurized state versus on the Y axis the displacement of the exterior portion 24 of the tool body 12 along axis 48.

Figure 7 illustrates one embodiment of a graph 62 plotting, for the embodiment of Figures 1-2, the displacement of the exterior portion 24 of the tool body 12 along axis 58 at varying diameters of the inner surface 30 of the exterior portion 24 and at varying pressures of the flexible internal pressure chamber 14. One curve 64 is shown when the flexible internal pressure chamber 14 of the tool body 12 is at a pressure of 20 bar, another curve 66 is shown when the flexible internal pressure chamber 14 of the tool body 12 is at a pressure of 40 bar, and another curve 68 is shown when the flexible internal pressure chamber 14 of the tool body 12 is at a pressure of 60 bar. The graph 62 uses a constant diameter 56 of 85 millimeters of the inner surface 30 of the exterior portion 24 along axis 58 when the flexible internal pressure chamber 14 is in an unpressurized state, and a constant revolutions per minute of the tool body 12 of 5,000 revolutions per minute. The graph 62 illustrates on the X axis the measurement of the diameter 60 of the inner surface 30 of the exterior portion 24 along axis 48 when the flexible internal pressure chamber 14 is in an unpressurized state versus on the Y axis the displacement of the exterior portion 24 of the tool body 12 along axis 58.

As demonstrated collectively in Figures 6-7, the displacement of the exterior portion 24 of the tool body 12 along both axis 48 and 58 may increase as the pressure increases in the flexible internal pressure chamber 14, and may also increase as the diameter 60 of the inner surface 30 of the exterior portion 24 along axis 48 increases. The displacement of the exterior portion 24 of the tool body 12 along axis 48 may be positive as the exterior portion 24 of the tool body 12 expands outwardly along axis 48. The displacement of the exterior portion 24 of the tool body 12 along axis 58 may be negative as the exterior portion 24 of the tool body 12 contracts internally along axis 58.

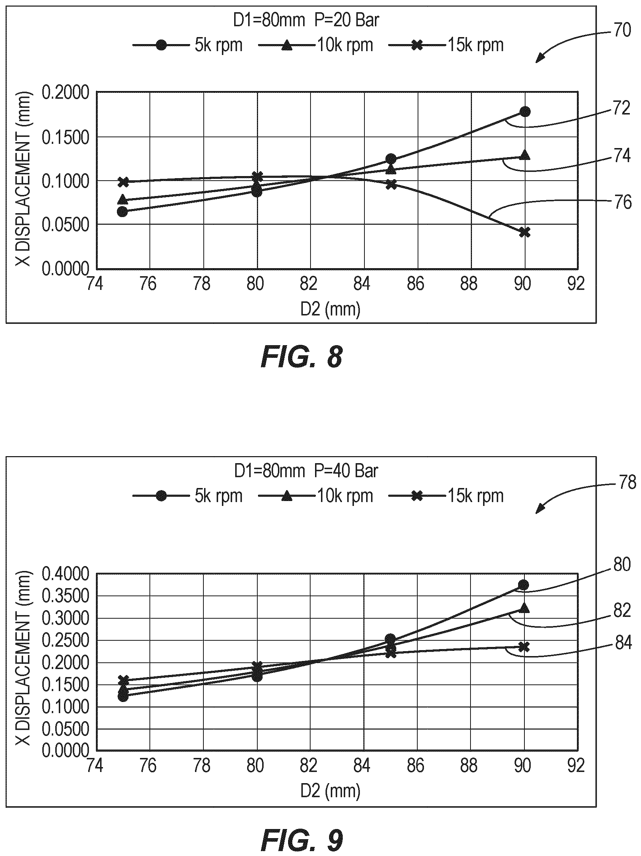

Figure 8 illustrates one embodiment of a graph 70 plotting, for the embodiment of Figures 1-2, the displacement of the exterior portion 24 of the tool body 12 along axis 48 at varying diameters of the inner surface 30 of the exterior portion 24 and at varying revolutions per minute of the tool body 12. One curve 72 is shown when the revolutions per minute of the tool body 12 is 5,000 revolutions per minute, another curve 74 is shown when the revolutions per minute of the tool body 12 is 10,000 revolutions per minute, and another curve 76 is shown when the revolutions per minute of the tool body 12 is 15,000 revolutions per minute. The graph 70 uses a constant diameter 56 of 80 millimeters of the inner surface 30 of the exterior portion 24 along axis 58 when the flexible internal pressure chamber 14 is in an unpressurized state, and a constant pressure within the flexible internal pressure chamber 14 of 20 bar. The graph 70 illustrates on the X axis the measurement of the diameter 60 of the inner surface 30 of the exterior portion 24 along axis 48 when the flexible internal pressure chamber 14 is in an unpressurized state versus on the Y axis the displacement of the exterior portion 24 of the tool body 12 along axis 48.

Figure 9 illustrates one embodiment of a graph 78 plotting, for the embodiment of Figures 1-2, the displacement of the exterior portion 24 of the tool body 12 along axis 48 at varying diameters of the inner surface 30 of the exterior portion 24 and at varying revolutions per minute of the tool body 12. One curve 80 is shown when the revolutions per minute of the tool body 12 is 5,000 revolutions per minute, another curve 82 is shown when the revolutions per minute of the tool body 12 is 10,000 revolutions per minute, and another curve 84 is shown when the revolutions per minute of the tool body 12 is 15,000 revolutions per minute. The graph 78 uses a constant diameter 56 of 80 millimeters of the inner surface 30 of the exterior portion 24 along axis 58 when the flexible internal pressure chamber 14 is in an unpressurized state, and a constant pressure within the flexible internal pressure chamber 14 of 40 bar. The graph 78 illustrates on the X axis the measurement of the diameter 60 of the inner surface 30 of the exterior portion 24 along axis 48 when the flexible internal pressure chamber 14 is in an unpressurized state versus on the Y axis the displacement of the exterior portion 24 of the tool body 12 along axis 48.

As demonstrated collectively in Figures 8-9, when the diameter 60 of the inner surface 30 of the exterior portion 24 along axis 48 is approximately 82.5 millimeters, the displacement of the exterior portion 24 of the tool body 12 along axis 48 stays constant as the revolutions per minute of the tool body 12 increase. When the diameter 60 of the inner surface 30 of the exterior portion 24 along axis 48 is greater or less than 82.5 millimeters, the displacement of the exterior portion 24 of the tool body 12 along axis 48 varies as the revolutions per minute of the tool body 12 increase. Moreover, Figures 8-9 illustrate that one can select the sizes and configurations of various portions (i.e. diameters 56 and 60) of the exterior portion 24 of the tool body 12 so that the displacement of the exterior portion 24 of the tool body 12 grows proportionately with pressure. This demonstrates that one can select the sizes and configurations of various portions of the exterior portion 24 of the tool body 12 to achieve the desired displacement parameters of the various portions of the exterior portion 24 of the tool body 12 at varying pressures within the flexible internal pressure chamber 14 and at varying revolutions per minute of the tool body 12. In such manner, the tool body 12 may be sized and configured to achieve the desired cutting parameters at varying locations of the tool body 12 holding cutting edges 16.

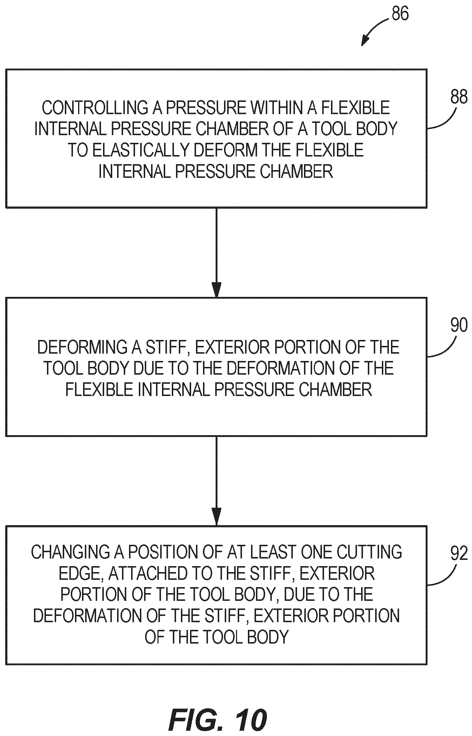

Figure 10 is a flowchart illustrating one embodiment of a method 86 of cutting. The method 86 may utilize any of the cutting tool systems disclosed herein. In other embodiments, the method 86 may utilize varying cutting tool systems.

In step 88, a pressure within a flexible internal pressure chamber of a tool body may be controlled to elastically deform the flexible internal pressure chamber. In step 90, a stiff, exterior portion of the tool body may deform due to the deformation of the flexible internal pressure chamber. In step 92, a position of at least one cutting edge, attached to the stiff, exterior portion of the tool body, may change due to the deformation of the stiff, exterior portion of the tool body.

In another embodiment, the method 86 may further comprise controlling the pressure within the flexible internal pressure chamber of the tool body with an external control device, a computer numerical control device, an electronic unit, a pressure sensor, a valve, and/or a frequency driven pump. These components may be in electronic communication and work together to control the pressure within the flexible internal pressure chamber of the tool body.

In yet another embodiment of the method 86, the stiff, exterior portion of the tool body deforming in step 90 may comprise at least one portion of the stiff, exterior portion of the tool body outwardly expanding, and at least another portion of the stiff, exterior portion of the tool body inwardly contracting.

In still another embodiment of the method 86, the flexible internal pressure chamber of the tool body may increase its elastic deformation as the pressure within the flexible internal pressure chamber increases. This may cause the stiff, exterior portion of the tool body to increasingly deform as the pressure within the flexible internal pressure chamber increases. This may cause the position of the at least one cutting edge attached to the stiff, exterior portion of the tool body to increasingly change as the pressure within the flexible internal pressure chamber increases.

In other embodiments of the method 86, one or more steps of the method 86 may be modified in substance or order, one or more steps of the method 86 may not be followed, or one or more additional steps may be added. In still other embodiments, the method 86 may further vary.

The Abstract is provided to allow the reader to quickly ascertain the nature of the technical disclosure. It is submitted with the understanding that it will not be used to interpret or limit the scope or meaning of the claims. In addition, in the foregoing Detailed Description, it can be seen that various features are grouped together in various embodiments for the purpose of streamlining the disclosure. This method of disclosure is not to be interpreted as reflecting an intention that the claimed embodiments require more features than are expressly recited in each claim. Rather, as the following claims reflect, inventive subject matter lies in less than all features of a single disclosed embodiment. Thus the following claims are hereby incorporated into the Detailed Description, with each claim standing on its own as a separately claimed subject matter.

While particular aspects of the present subject matter described herein have been shown and described, it will be apparent to those skilled in the art that, based upon the teachings herein, changes and modifications may be made without departing from the subject matter described herein and its broader aspects and, therefore, the appended claims are to encompass within their scope all such changes and modifications as are within the true scope of the subject matter described herein. Furthermore, it is to be understood that the disclosure is defined by the appended claims. Accordingly, the disclosure is not to be restricted except in light of the appended claims and their equivalents.

## Claims

1. A cutting tool system comprising:
a tool body;
a flexible internal pressure chamber disposed within the tool body; and
at least one cutting edge attached to the tool body;
wherein the flexible internal pressure chamber is configured to elastically deform, due to pressure within the flexible internal pressure chamber, which in turn deforms the tool body, which in turn changes a position of the at least one cutting edge attached to the tool body.

2. The cutting tool system of claim 1 further comprising a computer numerical control device to assist in controlling the pressure within the flexible internal pressure chamber.

3. The cutting tool system of claim 2 further comprising a pressure sensor disposed within the flexible internal pressure chamber.

4. The cutting tool system of claim 2 or claim 3 further comprising a valve and/or a frequency driven pump connected to the flexible internal pressure chamber.

5. The cutting tool system of any one of the preceding claims wherein an exterior portion of the tool body is stiff.

6. The cutting tool system of any one of the preceding claims wherein the tool body comprises a cylindrical shape when the flexible internal pressure chamber is in an unpressurized state.

7. The cutting tool system of any one of the preceding claims wherein the tool body comprises a non-uniform shape when the flexible internal pressure chamber is in an unpressurized state.

8. The cutting tool system of any one of the preceding claims wherein when the flexible internal pressure chamber is under the pressure within the flexible internal pressure chamber, at least one portion of the tool body outwardly expands, and at least another portion of the tool body inwardly contracts.

9. The cutting tool system of any one of the preceding claims wherein the flexible internal pressure chamber is configured to increasingly elastically deform as the pressure within the flexible internal pressure chamber increases thereby causing the tool body to increasingly deform as the pressure within the flexible internal pressure chamber increases thereby causing the position of the at least one cutting edge attached to the tool body to increasingly change as the pressure within the flexible internal pressure chamber increases.

10. The cutting tool system of any one of the preceding claims wherein the change in the position of the at least one cutting edge attached to the tool body is independent of how quickly the cutting tool system rotates.

11. A cutting tool system comprising:
a tool body comprising a stiff, exterior portion;
a flexible internal pressure chamber disposed within the tool body, the flexible internal pressure chamber supporting the stiff, exterior portion;
at least one cutting edge attached to the stiff, exterior portion of the tool body;
at least one pressure sensor connected to the flexible internal pressure chamber;
a valve connected to the flexible internal pressure chamber; and
a computer numerical control device connected to the at least one pressure sensor and to the valve, the computer numerical control device configured to monitor the pressure within the flexible internal pressure chamber with the at least one pressure sensor, and to control the pressure within the flexible internal pressure chamber with the valve;
wherein the flexible internal pressure chamber is configured to elastically deform, due to the pressure applied by the computer numerical control device within the flexible internal pressure chamber, thereby deforming the stiff, exterior portion, thereby changing a position of the at least one cutting edge attached to the stiff, exterior portion of the tool body.

12. The cutting tool system of claim 11 wherein the tool body comprises a cylindrical shape when the flexible internal pressure chamber is in an unpressurized state.

13. The cutting tool system of claim 11 or claim 12 wherein the tool body comprises a non-uniform shape when the flexible internal pressure chamber is in an unpressurized state.

14. The cutting tool system of any one of claims 11 to 13 wherein when the flexible internal pressure chamber is under the pressure within the flexible internal pressure chamber, at least one portion of the tool body outwardly expands, and at least another portion of the tool body inwardly contracts.

15. The cutting tool system of any one of claims 11 to 14 wherein the flexible internal pressure chamber is configured to increasingly elastically deform as the pressure within the flexible internal pressure chamber increases thereby causing the tool body to increasingly deform as the pressure within the flexible internal pressure chamber increases thereby causing the position of the at least one cutting edge attached to the stiff, exterior portion of the tool body to increasingly change as the pressure within the flexible internal pressure chamber increases.

16. The cutting tool system of any one of claims 11 to 15 wherein the change in the position of the at least one cutting edge attached to the stiff, exterior portion of the tool body is independent of how quickly the cutting tool system rotates.

17. A method of cutting comprising:
controlling a pressure within a flexible internal pressure chamber of a tool body to elastically deform the flexible internal pressure chamber;
a stiff, exterior portion of the tool body deforming due to the deformation of the flexible internal pressure chamber; and
a position of at least one cutting edge, attached to the stiff, exterior portion of the tool body, changing due to the deformation of the stiff, exterior portion of the tool body.

18. The method of claim 17 further comprising controlling the pressure within the flexible internal pressure chamber of the tool body in part with a computer numerical control device.

19. The method of claim 17 or claim 18 wherein the stiff, exterior portion of the tool body deforming comprises at least one portion of the stiff, exterior portion of the tool body outwardly expanding, and at least another portion of the stiff, exterior portion of the tool body inwardly contracting.

20. The method of any one of claims 17 to 19 further comprising the flexible internal pressure chamber of the tool body increasingly its elastic deformation as the pressure within the flexible internal pressure chamber increases thereby causing the stiff, exterior portion of the tool body to increasingly deform as the pressure within the flexible internal pressure chamber increases thereby causing the position of the at least one cutting edge attached to the stiff, exterior portion of the tool body to increasingly change as the pressure within the flexible internal pressure chamber increases.
